# EUROPEAN PATENT APPLICATION

(11) **EP 0 859 211 A1**
(43) Date of publication of application: **19.08.1998**
(21) Application number: 98102304.7
(22) Date of filing: 10.02.1998
(51) Int. Cl.: F41H 5/22, B60R 21/13

(54) **Military vehicle**

(30) Priority: 14.02.1997 IT TO970128
(71) Applicant: IVECO FIAT S.p.A., 10156 Torino (IT)
(72) Inventor: Struffi, Luciano, 39100 Bolzano (IT)
(74) Representative: Franzolin, Luigi

(57) **Abstract**

A military vehicle (1) comprising an interior compartment (2) bounded by an upper wall (3) provided with an opening (4), a hatch (5) connected to said upper wall (3) and able to move between a first, lowered closure position and a second, fully raised position, a guard device (14) connected to the hatch (5) and able to be joined rigidly to the upper wall (3) of the vehicle (1) in an intermediate position of the hatch (5) itself so as to protect said passenger in the event of the vehicle (1) overturning.

## Description

The present invention relates to a military vehicle and in particular but not exclusively to an armoured car.

Military vehicles are known, in particular armoured cars, of the type comprising an interior compartment bounded by an upper wall provided with an opening level with the driving seat and a hatch hinged to said upper wall and able to move from a lowered position closing the opening and a fully raised open position.

When the hatch is in the closed position the driver can see outside the vehicle through a system of periscopes.

When the hatch is open the driver can adopt a raised driving position, with his head protruding upwards through the opening of the hatch itself so as to able to have a direct view towards the outside.

This arrangement exposes the driver to very serious danger in the event of the vehicle overturning, since the fully open hatch does not offer any protection to the driver and the weakly secured hatch may collapse with serious consequences for the passenger, such as impacts or crushing.

The object of the present invention is to devise a military vehicle provided with an upper hatch which exhibits a high degree of safety and, in particular, eliminates the aforementioned risks.

This object is achieved by the present invention in that it relates to a military vehicle of the type comprising an interior compartment bounded by an upper wall provided with an opening and a hatch connected to said upper wall and able to move between a first, lowered position closing the opening and a raised position allowing a passenger a direct view outside the vehicle, characterised in that it comprises a guard device connected to said hatch and adapted to connect the hatch itself to said upper wall of the vehicle in an intermediate position of said hatch so as to protect said passenger in the event of the vehicle overturning.

With a view to a better understanding of the present invention a preferred embodiment will be described non-restrictively by way of example below and with reference to the accompanying drawings, in which:
Figure 1 is a view in side elevation of a military vehicle designed in accordance with the present invention;
Figure 2 is a view in side elevation and partly in section of a hatch of the vehicle in Figure 1, in a first operative position;
Figure 3 illustrates schematically a detail of a guard device for the hatch, in a position corresponding to that in Figure 2;
Figure 4 is a view in side elevation and partly in section of the hatch of Figure 2, in a second operative position.
Figure 5 illustrates schematically the same detail of Figure 3, in a position corresponding to that in Figure 4;
Figure 6 is a plan view of the hatch;
Figure 7 is a section along the line VII-VII in Figure 4;
Figure 8 is a section along the line VIII-VIII in Figure 6;
Figure 9 is a section along the line IX-IX in Figure 5;
Figure 10 is a view in side elevation and partly in section of a hatch according to a variant of embodiment of the present invention, and
Figure 11 is a partial plan view from above of a detail of the hatch in Figure 10.

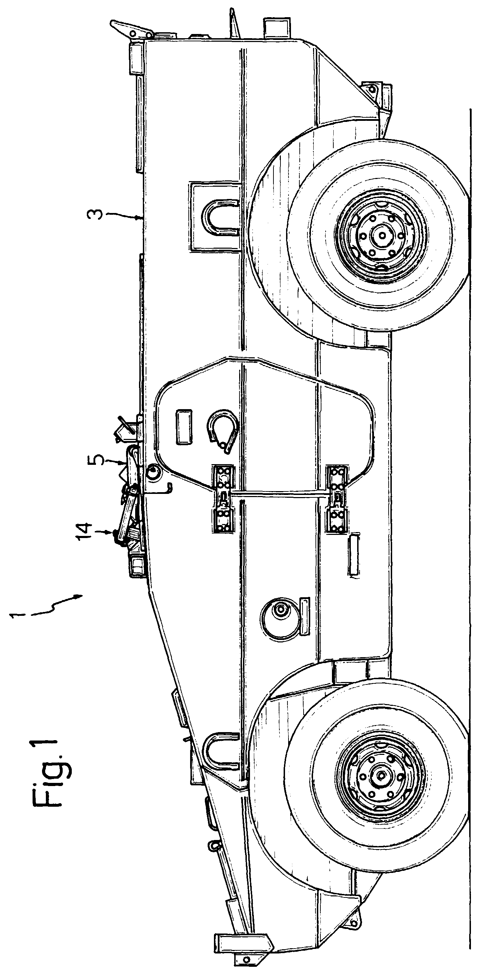

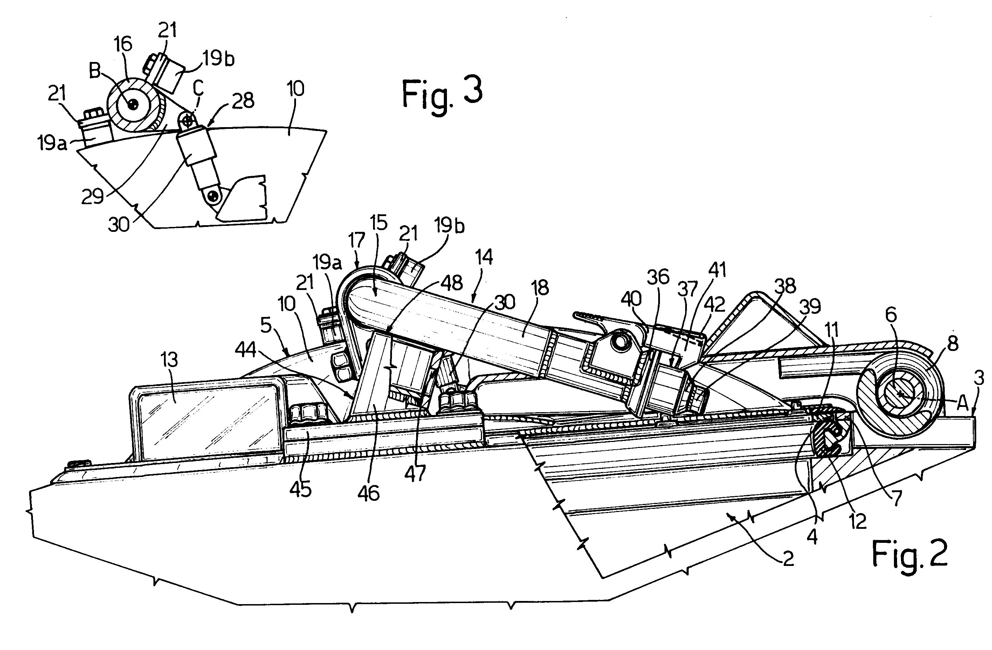

With reference to Figures 1 and 2, the reference numeral 1 generally denotes a military vehicle, in particular an armoured car, having an interior compartment 2 bounded by an upper wall 3 provided with an opening 4.

The opening 4 is associated with a hatch 5 hinged to the upper wall 3 about a pivot 6 having a horizontal axis A disposed in the vicinity of a rear side 7 of the opening 4.

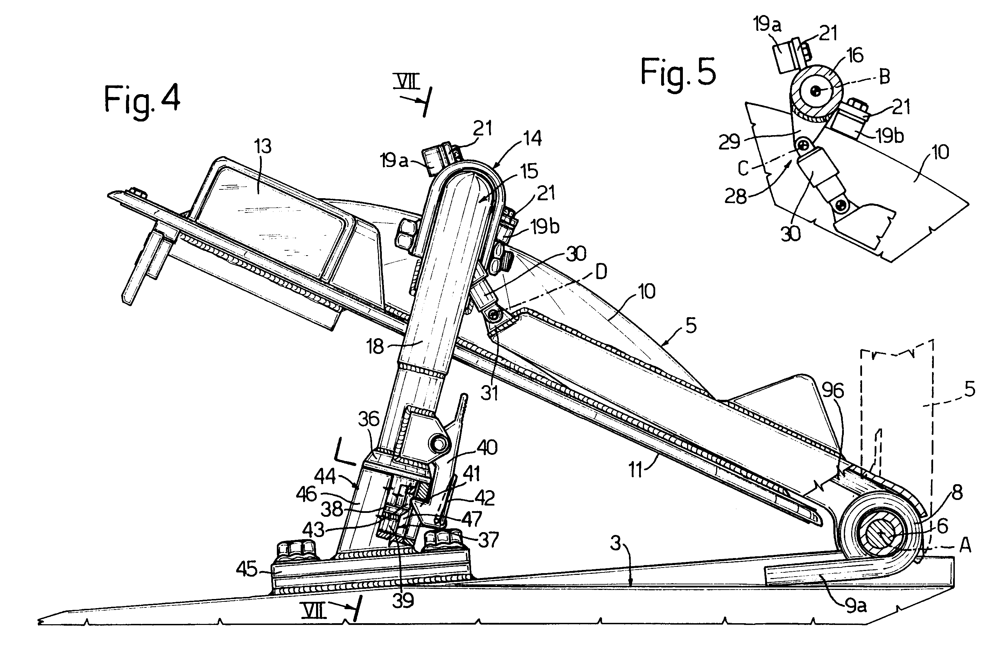

The hatch 5 is movable between a lowered position (Figure 2), in which it closes the aperture 4, and a raised fully open position (partly shown partly dashed line in Figure 4), in which it allows a man to pass through the opening 4. To facilitate the opening and closing operations, the weight of the hatch 5 is substantially balanced in any position of the hatch itself, in a known manner, by a helical spring 8 wound around the pivot 6 and having respective end portions 9a,9b co-operating with the upper wall 3 and with the hatch 5 so as to transmit to the latter in the direction of the opening a load of variable intensity along the travel of the hatch itself.

The hatch 5 has a convex upper wall 10 and a flat peripheral flange 11 adapted to co-operate with a peripheral seal 12 for the opening 4 in the closed position of the hatch 5.

The hatch 5 is provided with polemoscopes 13 to provide an indirect view outside the vehicle 1 when the hatch 5 is in the closed position.

According to the present invention, the vehicle 1 is provided with a guard device 14 associated with the hatch 5 and adapted to lock the latter in a partly raised intermediate position (Figure 4) so as to allow the passenger, typically the driver, to look directly outwards, with his head positioned in alignment with the opening 4 and immediately below the hatch 5.

Said device essentially comprises a rigid U-shaped bar 15 which is mounted above the hatch 5 and is adapted to be connected rigidly with the upper part 3 of the vehicle in the partly raised position of the hatch 5. More precisely, the bar 15 comprises an intermediate portion 16 arranged on the hatch 5 in a transverse direction to the travel direction of the vehicle along an axis B parallel to the axis A, and it is connected to the hatch 5 so as to be able to rotate about its axis B by means of a pair of hinges 17. Additionally, the bar 15 comprises a pair of lateral portions 18 integral with the intermediate portion 16 and bent therefrom parallel to one another in a direction orthogonal to the axis B.

The bar 15 is movable, with respect to the hatch 5, between two end positions, shown respectively in Figures 2 and 4, defined by the contact between respective stop members 19a,19b of elastomeric material mounted on the bar 15 and the upper convex wall 10 of the hatch 5 itself. The stop members 19a,19b are secured, in an adjustable manner, to respective support brackets 21 extending in a radial direction from a middle zone of the intermediate portion 16 of the bar 15. In a first of said positions (Figure 2) the bar 15 is arranged with its end portions 18 turned substantially towards the hinge axis A of the hatch 5; in the second position, which is obtained by rotating the bar 15 through about 60° in a clockwise direction with reference to Figures 2 and 4, the lateral portions 18 of the bar 15 are turned in a substantially transverse direction with respect to the plane of the flange 11.

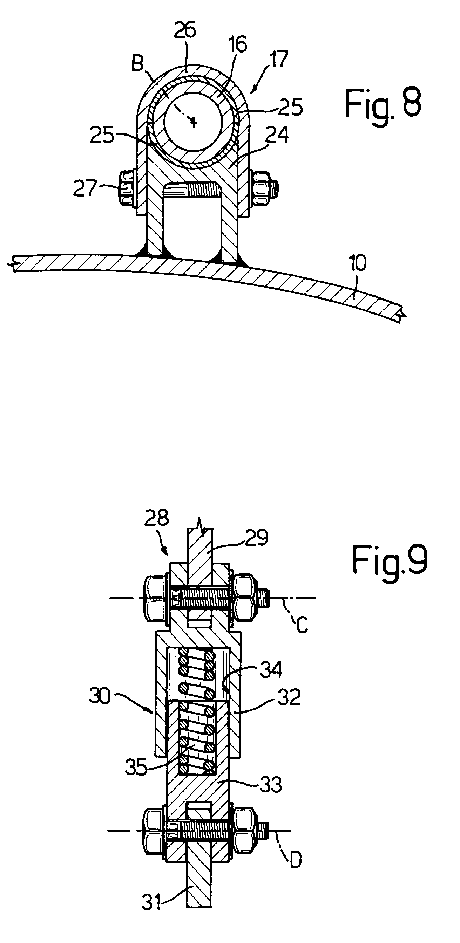

As is clearly shown in Figure 8, each of the hinges 17 is formed by a cradle-type mounting 24 ded to the upper wall 10 of the hatch 5, by a pair of antifriction half-bushes 25 disposed on the mounting 24, through which is inserted the intermediate portion 16 of the bar 15, and by a U-shaped clamping bracket 26 which encloses the half-bushes 25 and clamps them in the mounting 24, to which the bracket 26 itself is rigidly secured by means of a pair of bolts 27.

The stability of said two relative positions of the bar 15 with respect to the hatch 5 is assured by a pair of toggle devices 28 which are illustrated schematically in Figures 3 and 5.

Each of the devices 28 essentially comprises a lever 29 rigidly connected (for example welded) to and projecting from the intermediate portion 16 of the bar 15, and an elastic strut 30 articulated to one end of the lever 29 about an axis C and a mounting 31 attached to the hatch 5 about an axis D.

The strut 30 is shown in section in Figure 9 and comprises a pair of spigot-and-socket elements 32, 33 which are telescopically coupled to one another and which define a cavity 34 in which there is accommodated a precompressed helical spring 35, the loading of which maintains the bar 15 in a stable condition in one or other end of travel position with respect to the hatch 5.

To change from one to the other of said positions, as is evident from a comparison of Figures 3 and 5, it is necessary to overcome an intermediate dead-centre position in which the lever 29 and the strut 30 are mutually in alignment, thereby ensuring the maximum compression of the spring 35, and the plane defined by the axes C and D passes through the axis A of the intermediate portion 16 of the bar 15.

The lateral portions 18 of the bar 15 are provided with respective annular flanges 36, from which extend respective caps 37 coaxial with the lateral portions 18. The caps 37 are each provided with a conical intermediate section 38 of decreasing diameter and a respective rubber end stop member 39. A hook 40 (Figure 4) is hinged to each of the lateral portions 4 in the vicinity of the respective flange 36, which hook 40 extends beyond the flange 36 and is acted upon by a spring 42 coaxial with the hinge pin towards the cap 37.

The hook 40 has a sawtoothed-shaped locating extension; the cap 37 is provided with a radial slot 43 adapted to partly receive said extension in the rest position of the hook 40 (Figure 2), in which the latter bears against the flange 36 under the action of the spring 42.

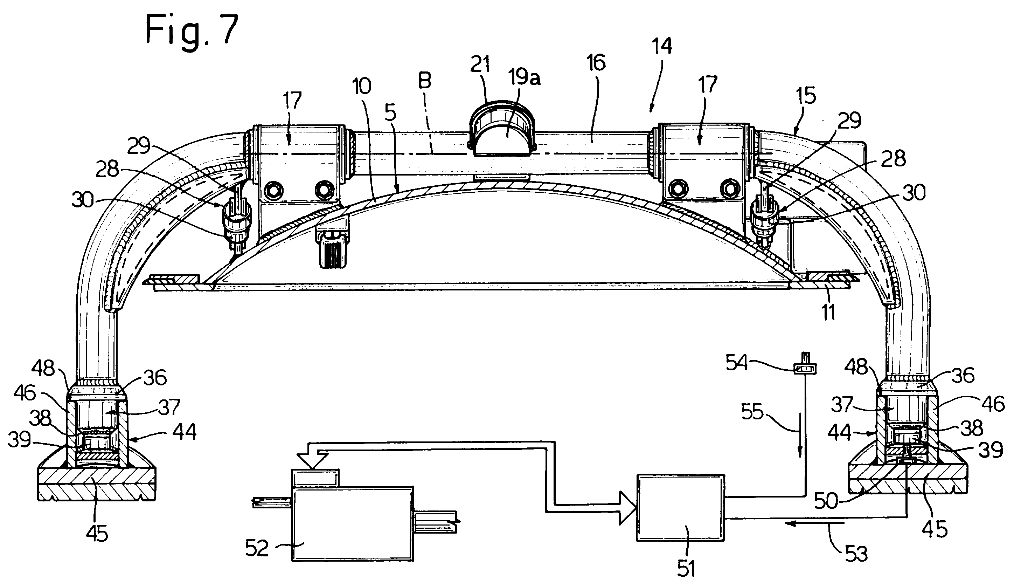

Finally, the device 14 comprises a pair of coupling members 44 for the respective caps 37, secured to the sides of the opening 4 (Figures 4 and 7). The coupling members 44 each comprise a base flange 45 adapted to be secured to the upper wall 3, and a tubular sleeve 46 extending upwards from the flange 45 in a rearwardly inclined direction. The sleeve 46 has a radial slot 47 adapted to define a locating seat for the extension 41 of the respective hook 40 and is bounded axially by a flat annular top surface 48.

Advantageously, as illustrated schematically in Figure 7, at least one of the coupling members 44 is provided with a microswitch 50 adapted to be actuated by a respective cap 37 when engaged in the member 44 itself. The microswitch 50 is connected to a control unit 51 of an automatic transmission 52 of the vehicle 1, to which it sends a signal 53, the status of which is representative of the presence or absence of the cap 37. Advantageously, another microswitch 54 senses the closed position of the hatch 5 and sends a corresponding input signal 55 to the unit 51.

The unit 51 operates in accordance with a programmed logic and can prevent or enable certain operations of the transmission as a function of the value of the signals 53, 55.

The mode of operation of the guard device 14 is as follows:

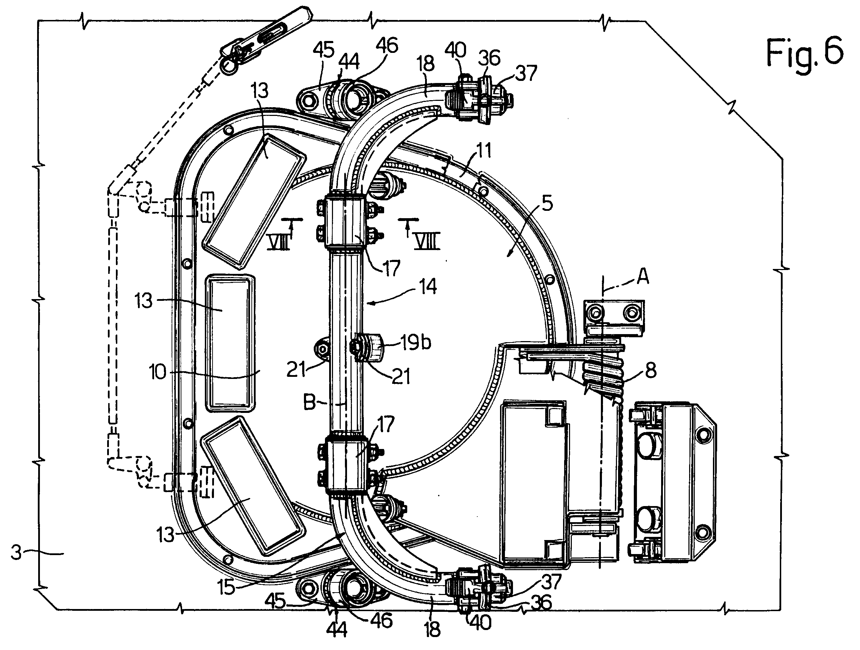

When the hatch 5 is closed (Figures 2 and 6) the bar 15 is disposed rearwardly in its initial position described above. This position is stable for the operation of the devices 28 which maintain the bar 15 elastically under load so as to ensure that the stop member 19 is in contact with the hatch 5.

When the hatch 5 is raised beyond said intermediate position, the bar 15 can be caused to rotate downwards and forwards about the axis A (Figures 4 and 7) as far as the second end-of-travel position. To achieve this it is necessary to overcome the aforesaid dead-centre position, which corresponds to the maximum compression of the spring 35. Once this position has been overcome, the bar 15 is released into the second position under the pressure exerted by the devices 28.

The inclination of the lateral portions 18 of the bar 15 is such that it provides for the engagement of the caps 37 in the respective coupling members 44; therefore, it is merely necessary to pull the hatch 5 with force towards the closed position so as to ensure the engagement of the caps 37 in the respective members 44 and the location thereof by means of the hooks 40.

In particular, the end stop 39 and the intermediate section 38 assist the centering of the caps 37 in the respective sleeves 46; during the engagement the sawtooth-like extension 41 of each hook co-operates with the top surface 48 of the associated sleeve 46, thereby inducing rotation of the hook 40 counter to the action of the spring 42. At the end of the engagement travel of the cap 37, defined by the contact between the flange 36 and the top surface 48 of the sleeve 46, the spring 42 moves the hook 40 towards the respective cap 37 and the extension 41 of the hook itself engages in the slot 47 of the sleeve 46.

In this condition, the hatch 5 is protected by the bar 15 and is rigidly connected by the latter to the upper part 3 of the vehicle 1.

Advantageously, the control unit 51 enables the complete functionality of the transmission 52 only in the condition in which the device 14 is operative, sensed by the microswitch 50, or in the closed position of the hatch 5, sensed by the microswitch 53. In the absence of one of the signals 53, 55 indicative of the aforementioned conditions, the unit 51 prevents the engagement of certain gears: for example, depending on the degree of safety required, the engagement of any gear can be precluded (the transmission 52 remains in the neutral condition if the device 14 is not actuated), or the engagement of the first forward gear or reverse gear can be enabled so as to allow the driver to carry out brief repositioning manoeuvres of the vehicle at low speed even if the hatch 5 is completely open.

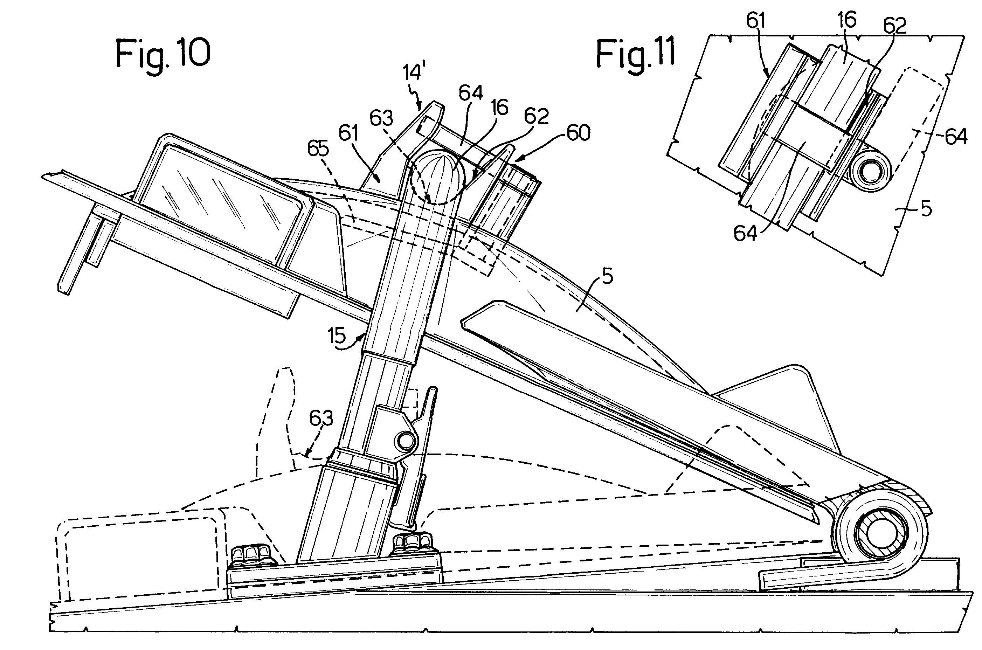

Figures 10 and 11 illustrate a variant of embodiment of the guard device 14, denoted by the reference numeral 14'. The device 14' will be described blow only insofar as it differs from the device 14, using the same reference numerals to denote like parts or those corresponding to the parts of the device 14 already described.

The device 14' comprises a bar 15, which is entirely analogous to the one described, and a releasable assembly 60 for connecting the intermediate portion 16 of the bar itself to the hatch 5. In particular, the assembly 60 comprises a U-shaped bracket 61 rigidly attached to the hatch 5, which bracket defines a transverse seating 62 for the intermediate portion 16 of the bar 15 downwardly bounded by a cradle-type support 63 for said portion.

The portion 16 of the bar 15 is connect to the hatch 5 by means of a latch-type member 64 hinged to the hatch 5 in the vicinity of the bracket 61 and movable between a locating position (illustrated in solid line in Figure 11), in which it is disposed transversely to the seating 62 in a position facing the support 63 so as to prevent the disengagement of the portion 16 from the seating itself, and a release position (illustrated in dashed line in Figure 11), in which said latch-type member 64 is disposed outside said seating 62 in a direction parallel to the axis of the portion 16.

The latch-type member 64 is controlled by a handle inside the hatch 5 and which can be operated manually, in the intermediate position of the hatch itself, so as to enable the hatch 5 to be closed rapidly, starting from the intermediate position.

Since this operation does not make it necessary for the bar 15 to be folded rearwards, as described with reference to the device 14, the toggle devices 28 are not required in this case.

Finally, it is evident that the vehicle 1 described above can undergo modifications and variants which do not depart from the scope of protection defined by the claims.

In particular, the bar 15 of the guard device 14 can be replaced by a bar of different shape or by a structure which is operationally equivalent but of different shape. Moreover, the devices 28 and the stop members 19a,19b can be replaced by another type of locating means.

Finally, the microswitches 50,54 can be replaced by sensing means of another type or in another position, for example associated with the hinge of the hatch 5, and the associated signals can be used to prevent other operating functions of the vehicle in accordance with any predetermined logic. For example, if it is considered necessary not to allow manoeuvres to be carried out or the vehicle to start moving with the hatch 5 open, the signal enabling ignition of the engine can be inhibited.

## Claims

1. A military vehicle (1) of the type comprising an interior compartment (2) bounded by an upper wall (3) provided with an opening (4) and a hatch (5) connected to said upper wall (3) and able to move between a first, lowered position closing the opening (4) and a raised position allowing a passenger a direct view outside the vehicle, characterised in that it comprises a guard device (14) connected to said hatch and adapted to connect the hatch (5) itself to said upper wall (3) of said vehicle (1) in an intermediate position of said hatch (5) so as to protect said passenger in the event of the vehicle (1) overturning.

2. A vehicle according to claim 1, characterised in that said hatch (5) can rotate about an axis (A) disposed in the vicinity of a rear side (7) of said opening (4), and in that said guard device (14) comprises a bar (15) provided with an intermediate portion (16) extending transversely to said hatch (5) and with a pair of end portions (37), and a pair of coupling members (44) arranged on the sides of said opening (4) and adapted to co-operate with respective end portions (37) of said bar (15) in said intermediate position of said hatch (5).

3. A vehicle according to claim 1, characterised in that said intermediate portion (16) is hinged to said hatch (5) about its axis (B).

4. A vehicle according to claim 2 or 3, characterised in that said bar (15) is U-shaped and comprises a pair of lateral portions (18) which are substantially orthogonal to said intermediate portion (16), said end portions of said bar (15) being defined by respective caps (37) coaxial with said lateral portions (18) of said bar (15).

5. A vehicle according to claim 4, characterised in that said coupling members (44) comprise respective sleeves (46) for accommodating said caps (37).

6. A vehicle according to claim 5, characterised in that said lateral portions (18) of said bar (15) are provided with respective stop flanges (36) adapted to co-operate axially with said respective sleeves (46) in said intermediate position of said hatch (5).

7. A vehicle according to any one of claims 3 to 7, characterised by comprising means (19a,19b,28) for locating said bar (15) with respect to said hatch (5) defining two stable end-of-travel positions of the bar (15) itself, in a first of said positions said bar being disposed with its lateral portions (18) turned substantially towards said axis (A) for the hinge-mounting of said hatch (5), in a second of said positions said bar (15) being disposed with its lateral portions (18) in a direction such that said sleeves (46) are engaged by said respective caps (37) in said intermediate position of said hatch (5).

8. A vehicle according to claim 7, characterised in that said locating means (19a,19b,28) comprise a pair of mechanical stop members (19a,19b) attached to said bar (15) and adapted to co-operate with said hatch (5) in the respective end-of-travel positions.

9. A vehicle according to claim 7 or 8, characterised in that said locating means (19a,19b,28) comprise at least one toggle device (28) provided with elastic thrust means (35) defining a dead-centre position interposed between said end-of-travel positions of said bar (15), said elastic means (35) being adapted to apply to a said bar (15) a thrust towards one or other of said end-of-travel positions when said bar (15) is situated on one or other side of said dead-centre position.

10. A vehicle according to any one of the preceding claims, characterised by comprising means (50) for sensing said intermediate position of said hatch (5) and means (51) for controlling operative functions of the vehicle receiving on the input side a signal (53) from said sensing means (5) and adapted to enable or prevent said operations in response to said signal (53).

11. A vehicle according to any one of claims 2 to 10, characterised by comprising releasable connecting means (60) interposed between said intermediate portion (16) of said bar (15) and said hatch.

12. A vehicle according to claim 11, characterised by comprising means (65) for manually actuating said connecting means (60) disposed inside said hatch (5).
